# EUROPÄISCHE PATENTSCHRIFT

(11) **EP 1 426 841 B1**
(45) Veröffentlichungstag und Bekanntmachung des Hinweises auf die Patenterteilung: **02.06.2010**
(21) Anmeldenummer: 02026773.8
(22) Anmeldetag: 02.12.2002
(51) Int. Cl.: G05B 19/05, H02M 3/156

(54) **Anordnung bestehend aus einer programmgesteuerten Einheit und einem mit dieser verbundenen Power-Baustein**
Assembly consisting of a programmable unit and a power block connected thereto
Ensemble composé d'une unité programmable connectée avec un élément de puissance

(43) Veröffentlichungstag der Anmeldung: 09.06.2004
(60) Teilanmeldung: 10159595.7
(73) Patentinhaber: Infineon Technologies AG, 85579 Neubiberg (DE)
(72) Erfinder: Barrenscheen, Jens, Dr., 81669 München (DE); Rohm, Peter, 85276 Pfaffenhofen a.d. Ilm (DE)
(74) Vertreter: Repkow, Ines

(56) Entgegenhaltungen:
- EP-A- 0 418 665
- EP-A- 0 489 944
- DE-A- 19 745 210
- US-A- 4 682 294
- US-A- 5 606 662
- US-B1- 6 317 458

## Beschreibung

Die vorliegende Erfindung betrifft eine Anordnung gemäß dem Oberbegriff des Patentanspruchs 1.

Eine solche Anordnung ist aus der US-B1 6 317 458 bekannt. Im Folgenden wird eine weitere Anordnung beschrieben, die ebenfalls eine Anordnung gemäß dem Oberbegriff des Patentanspruchs 1 ist.

Die erwähnte programmgesteuerte Einheit sei vorliegend ein Mikrocontroller, kann aber beispielsweise auch ein Mikroprozessor oder ein Signalprozessor sein.

Im Mikrocontroller wird ein Steuerprogramm ausgeführt, durch welches festgelegt wird, wie die am Power-Baustein angeschlossenen elektrischen Verbraucher anzusteuern sind. Der Mikrocontroller steuert die Verbraucher jedoch nicht selbst an, sondern tut dies über den Power-Baustein.

Der Power-Baustein tut im wesentlichen nichts anderes, als die an ihm angeschlossenen elektrischen Verbraucher entsprechend den Vorgaben des Mikrocontrollers anzusteuern.

Solche Anordnungen kommen beispielsweise zum Einsatz, wenn der Mikrocontroller nicht in der Lage ist, die elektrischen Verbraucher selbst anzusteuern. Dies ist insbesondere der Fall, wenn die den Verbrauchern zuzuführenden Spannungen und/oder Ströme so groß sind, daß sie der Mikrocontroller nicht selbst erzeugen kann oder nur mit einem nicht vertretbaren Aufwand selbst erzeugen könnte.

Solche Anordnungen werden beispielsweise, aber nicht ausschließlich in Kraftfahrzeug-Steuergeräten eingesetzt. Kraftfahrzeug-Steuergeräte müssen unter anderem eine ganze Reihe von Verbrauchern durch Zuführen von Energie und Unterbrechung der Energiezufuhr steuern. Die meisten Verbraucher müssen dabei mit so hohen Spannungen (beispielsweise 12 V) und/oder so hohen Strömen (beispielsweise 1 A und größer) versorgt werden, daß sie nicht von einem Mikrocontroller, aber sehr wohl von einem Power-Baustein erzeugt werden können.

Der Power-Baustein ist durch den Mikrocontroller konfigurierbar, und bekommt vom Mikrocontroller das Timing für die Verbraucher-Ansteuerung vorgegeben.

Eine weitere Konfigurierung des Power-Bausteins könnte durch die Übertragung von im folgenden als Kontrolldaten bezeichneten Daten an den Power-Baustein erfolgen. Hierdurch könnte im Power-Baustein beispielsweise eingestellt werden, ob er im normalen Modus oder in einem besonderen Modus, beispielsweise im Sleep-Modus arbeiten soll.

Die Vorgabe des Timings für die Verbraucher-Ansteuerung erfolgt durch die Übertragung von im folgenden als Verbrauchersteuerdaten bezeichneten Signalen oder Daten an den Power-Baustein. Als Verbrauchersteuerdaten können beispielsweise von einem Timer des Mikrocontrollers erzeugte pulsweitenmodulierte Signale verwendet werden.

Der Power-Baustein übermittelt an den Mikrocontroller Statusinformationen, durch welche dem Mikrocontroller im Power-Baustein herrschende Zustände oder auftretende Ereignisse signalisiert werden. Die Statusinformationen werden durch die Übertragung von im folgenden als Diagnosedaten bezeichnete Daten an den Mikrocontroller übermittelt. Durch diese Diagnosedaten kann dem Mikrocontroller beispielsweise signalisiert werden, daß ein Verbraucher zu viel Strom zieht, oder daß eine Übertemperatur vorliegt.

Bei Anordnungen der vorstehend beschriebenen Art stellt unter anderem die Übertragung der Verbrauchersteuerdaten ein Problem dar.

Bis vor kurzem erfolgte die Übertragung derart, daß für jeden der am Power-Baustein angeschlossenen Verbraucher auf einer eigenen Leitung ein eigenes pulsweitenmoduliertes Signal zum Power-Baustein übertragen wurde.

Diese Art der Verbrauchersteuerdaten-Übertragung ist nachteilig, weil der Mikrocontroller und der Power-Baustein in diesem Fall über sehr viele Leitungen miteinander verbunden sein müssen und eine entsprechend große Anzahl von Ein- und/oder Ausgabe-Anschlüssen aufweisen müssen.

Dieses Problem wurde mittlerweile bereits erkannt und durch die Entwicklung des sogenannten Microsecond-Busses abgeschwächt. Der Microsecond-Bus weist die Besonderheit auf, daß die zuvor parallel zum Power-Baustein übertragenen Verbrauchersteuer-Signale in regelmäßigen zeitlichen Abständen, beispielsweise in zeitlichen Abständen von 1 µs abgetastet werden, und daß die Abtastwerte über einen einzigen Übertragungskanal seriell zum Power-Baustein übertragen werden. Der Power-Baustein rekonstruiert aus den ihm zugeführten Daten die abgetasteten pulsweitenmodulierten Signale und steuert die an ihm angeschlossenen Verbraucher entsprechend an. Dadurch läßt sich eine erhebliche Reduzierung der zwischen dem Mikrocontroller und dem Power-Baustein vorzusehenden Leitungen erzielen und entsprechend geringer ist auch die Anzahl der vorzusehenden Ein- und/oder Ausgabeanschlüsse des Mikrocontrollers und des Power-Bausteins.

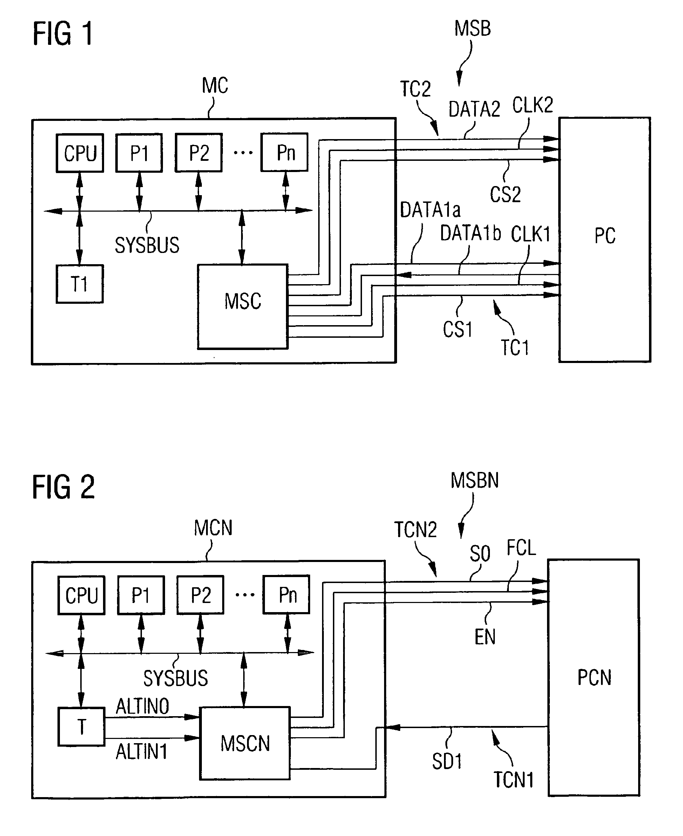

Eine Anordnung, bei welcher ein Mikrocontroller und ein Power-Baustein über einen Microsecond-Bus miteinander verbunden sind, könnte wie in Figur 1 veranschaulicht aufgebaut sein und wie im Folgenden beschrieben arbeiten.

Die Figur 1 zeigt einen Mikrocontroller MC, einen Power-Baustein PC, und einen den Mikrocontroller und den Power-Baustein verbindenden Microsecond-Bus MSB.

Der Mikrocontroller MC enthält eine CPU CPU, einen Timer T, einen Microsecond-Bus-Controller MSC, und diverse weitere Einheiten P1 bis Pn, wobei die genannten Komponenten über einen internen System-Bus SYSBUS miteinander verbunden sind.

Der Timer T erzeugt das Timing der Verbraucher-Ansteuerung vorgebende pulsweitenmodulierten Signale, und führt diese über den System-Bus SYSBUS dem Microsecond-Bus-Controller MSC zu. Der Timer erzeugt im betrachteten Beispiel insgesamt 16 Ausgangssignale, von welchen jedes ein Bit umfaßt, und anzeigt, ob eine im Timer eingestellte, dem jeweiligen Timer-Ausgangssignal zugeordnete Bedingung erfüllt ist oder nicht. Die Timer-Ausgangssignale werden in bestimmten zeitlichen Abständen, beispielsweise in zeitlichen Abständen von 1 µs zum Microsecond-Bus-Controller MSC übertragen, welcher diese Signale seriell über den Microsecond-Bus MSB zum Power-Baustein PC überträgt.

Der Microsecond-Bus MSB umfaßt einen ersten Übertragungskanal TC1 und einen zweiten Übertragungskanal TC2, wobei der erste Übertragungskanal TC1 aus Leitungen DATA1a, DATA1b, CLK1, und CS1 besteht, und wobei der zweite Übertragungskanal TC2 aus Leitungen DATA2, CLK2, und CS2 besteht.

Über die Leitung CLK2 überträgt der Mikrocontroller MC zum Power-Baustein PC ein Übertragungstaktsignal.

Über die Leitung DATA2 überträgt der Mikrocontroller MC zum Power-Baustein PC im Takt des über die Leitung CLK2 übertragenen Übertragungstaktsignals seriell die jeweils aktuellen Pegel der Timer-Ausgangssignale, also die Verbrauchersteuerdaten.

Über die Leitung CS2 überträgt der Mikrocontroller MC zum Power-Baustein PC ein Chip-Select-Signal, durch welches dem Power-Baustein der Beginn und das Ende der Übertragung von für den Power-Baustein bestimmten Daten über die Leitung DATA2 signalisiert wird.

Über die Leitung CLK1 überträgt der Mikrocontroller MC zum Power-Baustein PC ein Übertragungstaktsignal.

Über die Leitung DATA1a überträgt der Mikrocontroller MC zum Power-Baustein PC im Takt des über die Leitung CLK1 übertragenen Übertragungstaktsignals seriell Kontrolldaten, und synchron hierzu überträgt der Power-Baustein PC über die Leitung DATA1b zum Mikrocontroller seriell Diagnosedaten.

Über die Leitung CS1 überträgt der Mikrocontroller MC zum Power-Baustein PC ein Chip-Select-Signal, durch welches dem Power-Baustein der Beginn und das Ende der Übertragung von für den Power-Baustein bestimmten Daten über die Leitung DATA1a signalisiert wird.

Wie aus den vorstehenden Erläuterungen ersichtlich ist, läßt sich durch die Verwendung des Microsecond-Bus die Anzahl der Leitungen zwischen dem Mikrocontroller MC und dem Power-Baustein PC und damit auch die Anzahl der Ein- und/oder Ausgabeanschlüsse des Mikrocontrollers und des Power-Bausteins erheblich verringern. Zwischen dem Mikrocontroller MC und dem Power-Baustein PC sind nur noch 7 Leitungen vorzusehen; bei der Übertragung der Timer-Ausgangssignale über jeweils eine eigene Leitung wären alleine schon für die Übertragung der Timer-Ausgangssignale 16 Leitungen vorzusehen.

Die Erfahrung zeigt, daß auch bei der Verwendung des Microsecond-Busses diverse Probleme ungelöst bleiben. Insbesondere kann das Verhalten des Power-Bausteines mitunter Probleme bereiten. Dies kann die Einsatzmöglichkeiten der Anordnung unerheblich einschränken.

Der vorliegenden Erfindung liegt daher die Aufgabe zugrunde, die Anordnung gemäß dem Oberbegriff des Patentanspruchs 1 derart weiterzubilden, daß diese auf einfache Weise an die gegebenen Anforderungen angepaßt werden kann und somit in beliebigen Systemen einsetzbar ist.

Diese Aufgabe wird erfindungsgemäß durch die im kennzeichnenden Teil des Patentanspruchs 1 beanspruchten Merkmale gelöst.

Dadurch kann die Anordnung schnell und einfach optimal an die gegebenen Verhältnisse und Anforderungen angepaßt werden.

Vorteilhafte Weiterbildungen der Erfindung sind den Unteransprüchen, der folgenden Beschreibung, und den Figuren entnehmbar.

Die Erfindung wird nachfolgend anhand von Ausführungsbeispielen unter Bezugnahme auf die Figuren näher erläutert. Es zeigen
- Figur 1: den Aufbau der eingangs beschriebenen herkömmlichen Anordnung,
- Figur 2: den Aufbau der im folgenden beschriebenen Anordnung,
- Figur 3: den Aufbau eines Teils der in der Anordnung gemäß Figur 2 enthaltenen Microsecond-Bus-Controllers,
- Figur 4: den Aufbau eine Diagnosedaten-Frame, und
- Figur 5: den Aufbau eines modifizierten Diagnosedaten-Frame.

Die programmgesteuerte Einheit der im folgenden beschriebene Anordnung ist ein Mikrocontroller, könnte aber auch beispielsweise ein Mikroprozessor oder ein Signalprozessor sein.

In Figur 2 ist der prinzipielle Aufbau eines Ausführungsbeispiels der hier vorgestellten Anordnung gezeigt.

Die in der Figur 2 gezeigte Anordnung enthält einen Mikrocontroller MCN, einen Power-Baustein PCN, und einen die genann ten Bausteine miteinander verbindenden modifizierten Microsecond-Bus MSBN.

Der modifizierte Microsecond-Bus MSBN ist ein Microsecond-Bus der zweiten Generation und wird im folgenden der Einfachheit halber als Microsecond-Bus bezeichnet. Dies bedeutet jedoch nicht, daß es hierbei um den eingangs unter Bezugnahme auf die Figur 1 beschriebenen Microsecond-Bus handelt. Der hier beschriebene Microsecond-Bus der zweiten Generation weist gegenüber dem eingangs beschriebenen Microsecond-Bus der ersten Generation eine ganze Reihe von später noch genauer beschriebenen Unterschieden auf.

Der Mikrocontroller MCN enthält eine CPU CPU, einen Timer T, einen Microsecond-Bus-Controller MSCN, und diverse weitere Einheiten P1 bis Pn, wobei die genannten Komponenten über einen internen System-Bus SYSBUS miteinander verbunden sind, und wobei der Timer T und der Microsecond-Bus-Controller MSCN über zusätzliche interne Busse ALTINO und ALTIN1 miteinander verbunden sind.

Der Timer T erzeugt die zum Power-Baustein PC zu übertragenen Timer-Ausgangssignale, und führt diese dem Microsecond-Bus-Controller MSCN über die Busse ALTINO und ALTIN1 zu. Der Timer erzeugt im betrachteten Beispiel insgesamt 32 Ausgangssignale, von welchen jedes ein Bit umfaßt, und anzeigt, ob eine im Timer eingestellte, dem jeweiligen Timer-Ausgangssignal zugeordnete Bedingung erfüllt ist oder nicht. Die Timer-Ausgangssignale werden in bestimmten zeitlichen Abständen, beispielsweise in zeitlichen Abständen von 1 µs zum Microsecond-Bus-Controller MSCN übertragen, welcher diese Signale seriell über den Microsecond-Bus MSB zum Power-Baustein PC überträgt.

Der Microsecond-Bus MSBN umfaßt einen ersten Übertragungkanal TCN1 und einen zweiten Übertragungskanal TCN2, wobei der erste Übertragungskanal TCN1 aus einer einzigen Leitung SDI besteht, und wobei der zweite Übertragungskanal TCN2 aus Leitungen SO, FCL, und EN besteht.

Über die Leitung FCL überträgt der Mikrocontroller MC zum Power-Baustein PC ein Übertragungstaktsignal. Die Leitung FCL entspricht der Leitung CLK2 der in der Figur 1 gezeigten herkömmlichen Anordnung. Allerdings wird das über die Leitung FCL übertragene Übertragungstaktsignal im allgemeinen eine höhere Frequenz haben als der über die Leitung CLK2 übertragene Übertragungstaktsignal.

Über die Leitung SO überträgt der Mikrocontroller MC zum Power-Baustein PC im Takt des über die Leitung FCL übertragenen Übertragungstaktsignals seriell Verbrauchersteuerdaten und Kontrolldaten. Die Verbrauchersteuerdaten haben den selben Inhalt wie die über die Leitung DATA2 der in der Figur 1 gezeigten Anordnung übertragenen Daten. Allerdings können zwischen den Verbrauchersteuerdaten Kontrolldaten übertragen werden. Die Übertragung der über die Leitung SO zu übertragenden Daten erfolgt also im Zeitmultiplex. Dies wird später noch genauer beschrieben.

Über die Leitung EN überträgt der Mikrocontroller MC zum Power-Baustein PC ein Chip-Select-Signal, durch welches dem Power-Baustein der Beginn und das Ende der Übertragung von für den Power-Baustein bestimmten Daten über die Datenleitung SO signalisiert wird. Die Leitung EN entspricht der Leitung CS2 der in der Figur 1 gezeigten herkömmlichen Anordnung.

Über die Leitung SDI überträgt der Power-Baustein PC zum Mikrocontroller seriell Diagnosedaten. Die Übertragung der Diagnosedaten erfolgt vorzugsweise asynchron. Diese und andere Übertragungsmöglichkeiten werden später noch genauer beschrieben.

Wie erwähnt werden die über die Leitung SO zu übertragenden Daten, also die Verbrauchersteuerdaten und die Kontrolldaten im Zeitmultiplex übertragen.

Der Microsecond-Bus-Controller MSCN generiert intern Zeitfenster konstanter Länge und überträgt in jedem Zeitfenster entweder Verbrauchersteuerdaten, Kontrolldaten, oder keine Daten. Mit der Übertragung der jeweils zu übertragenden Daten wird immer zu Beginn eines Zeitfensters begonnen. Die Übertragung der Verbrauchersteuerdaten erfolgt im betrachteten Beispiel so, daß einem Zeitfenster, in welchem Verbrauchersteuerdaten zum Power-Baustein übertragen wurden, immer n Zeitfenster folgen, in welchem keine Verbrauchersteuerdaten zum Power-Baustein übertragen werden, so daß also in jedem n+1-ten Zeitfenster Verbrauchersteuerdaten zum Power-Baustein übertragen werden. n ist eine durch die CPU des Mikrocontrollers einstellbarer Wert, und liegt im betrachteten Beispiel zwischen 0 und 15. In den Zeitfenstern, die nicht für die Übertragung von Verbrauchersteuerdaten reserviert sind, können Kontrolldaten zum Power-Baustein übertragen werden.

Ein Sonderfall liegt vor, wenn n=0 ist. In diesem Fall existieren keine Zeitfenster, die nicht für die Übertragung von Verbrauchersteuerdaten reserviert sind. Daher wird bei n=0 so vorgegangen, daß die Übertragung von Kontrolldaten Vorrang vor der Übertragung von Verbrauchersteuerdaten hat. D.h., wenn im Microsecond-Bus-Controller MSCN zum Power-Baustein zu übertragende Kontrolldaten vorliegen, werden diese Kontrolldaten anstelle der eigentlich zu übertragenden Verbrauchersteuerdaten übertragen. Daß die Übertragung von Kontrolldaten Vorrang vor der Übertragung von Verbauchersteuerdaten hat, kann auch vorgesehen werden, wenn n zwischen 1 und 15 liegt.

Die pro Zeitfenster übertragenen Verbrauchersteuerdaten umfassen im betrachteten Beispiel jeweils 32 Bits, von welchen jedes für die Steuerung eines anderen Verbrauchers bestimmt ist; der Mikrocontroller kann im betrachteten Beispiel bis zu 32 Verbraucher steuern. Die pro Zeitfenster übertragenen Kontrolldaten umfassen im betrachteten Beispiel ebenfalls jeweils 32 Bits können aber auch mehr Bits oder weniger Bits umfassen. Sowohl die Verbrauchersteuerdaten als auch die Kontrolldaten werden zusammen mit einer Information übertragen, anhand welcher der Power-Baustein ermitteln kann, ob es sich bei den jeweils übertragenen Daten um Verbrauchersteuerdaten oder um Kontrolldaten handelt.

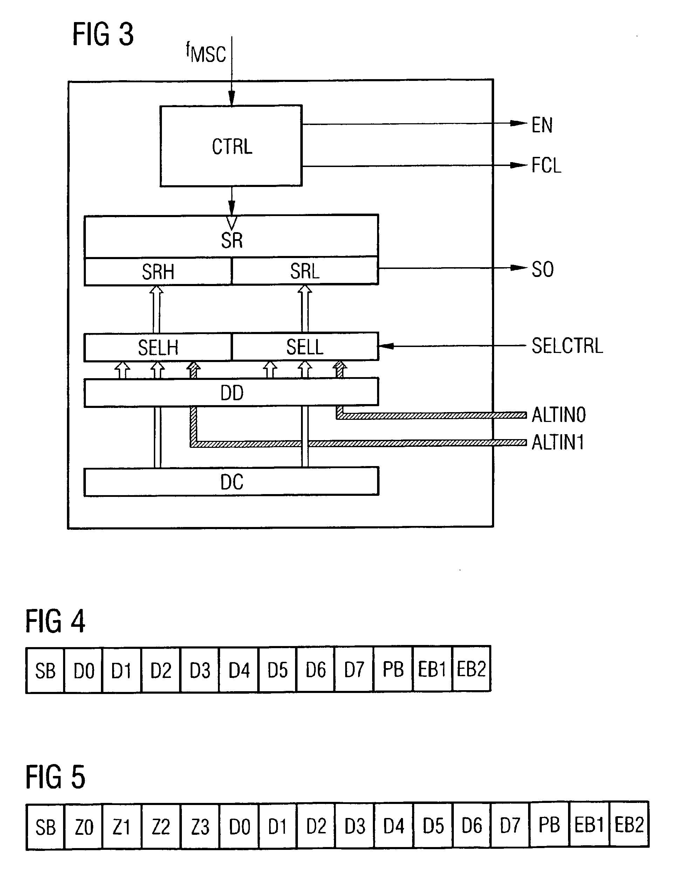

Im folgenden wird unter Bezugnahme auf die Figur 3 der Aufbau des Teils des Microsecond-Bus-Controllers MSCN beschrieben, welcher die über die Leitungen FCL, SO, und EN übertragenen Daten auf diese Leitungen ausgibt.

Der gezeigte Teil des Microsecond-Bus-Controllers MSCN umfaßt eine Steuereinrichtung CTRL, eine Schieberegister SRH und SRL umfassende Schieberegistereinheit SR, Auswahleinrichtungen SELH und SELL, ein Datenregister DD, und ein Kommandoregister DC.

Die Steuereinrichtung CTRL
- erzeugt aus einem der Steuereinrichtung zugeführten Taktsignal f_{MSC} das über die Leitung FCL zu übertragenden Übertragungstaktsignal und gibt dieses auf die Leitung FCL aus,
- erzeugt das über die Leitung EN zu übertragende Chip-Select-Signal und gibt dieses auf die Leitung EN aus, und
- steuert die Schieberegistereinheit SR.

Das Kommandoregister DC ist ein 32 Bits umfassendes Register, in welchem zum Power-Baustein zu übertragende Kontrolldaten gespeichert werden. Diese Daten werden durch die CPU erzeugt und über den Systembus SYSBUS in das Kommandoregister DC geschrieben.

Das Datenregister DD ist ein 32 Bits umfassendes Register, in welchem Verbrauchersteuerdaten gespeichert werden. Diese Daten werden durch die CPU erzeugt und über den Systembus SYSBUS in das Datenregister DC geschrieben.

Die Auswahleinrichtungen SELH und SELL sind den Schieberegistern SRH und SRL vorgeschaltete Einrichtungen, durch welche bestimmt wird, welche Daten in die Schieberegister geschrieben werden.

Der Auswahleinrichtung SELL werden die 16 niederwertigsten Bits des Kommandoregisters DC, die 16 niederwertigsten Bits des Datenregisters DD, und die über Bus ALTIN0 übertragenen, 16 Bits umfassenden Daten zugeführt. Der Auswahleinrichtung SELH werden die 16 höchstwertigsten Bits des Kommando-registers DC, die 16 höchstwertigsten Bits des Datenregisters DD, und die über Bus ALTIN1 übertragenen, ebenfalls 16 Bits umfassenden Daten zugeführt. Die Auswahleinrichtungen SELL und SELH weisen einen Steueranschluß SELCTRL auf, über welchen einstellbar ist, welche der den Auswahleinrichtungen SELL und SELH zugeführten Daten zu den Schieberegistern SRL und SRH weitergeleitet werden. Die Festlegung erfolgt bitweise. D.h., es ist für jedes einzelne Bit der zu den Schieberegistern SRL und SRH weitergeleiteten Daten festlegbar, aus welcher Quelle es stammt.

Die Steuerung de Auswahleinrichtungen SELL und SELH erfolgt durch die CPU des Mikrocontrollers, oder durch die Steuereinrichtung CTRL.

Die zu den Schieberegistern SRL und SRH weitergeleiteten Daten werden parallel in diese übernommen, und anschließend seriell im Takt des über die Leitung FCL übertragenen Übertragungstaktsignals auf die Leitung SO ausgegeben.

Zeitgleich mit dem Beginn der Übertragung von Daten über die Leitung SO geht das über die Leitung EN übertragene Chip-Select-Signal vom niedrigen Pegel auf den hohen Pegel (oder umgekehrt). Nachdem die innerhalb eines Zeitfensters zu übertragenden Daten übertragen sind, genauer gesagt im wesentlichen zeitgleich hiermit geht das Chip-Select-Signal vom hohen Pegel wieder auf den niedrigen Pegel zurück (oder umgekehrt). Das Chip-Select-Signal signalisiert dem Power-Baustein den Beginn und das Ende der Übertragung von für den Power-Baustein bestimmten Daten über die Leitung SO.

Der Microsecond-Bus-Controller MSCN ist in der Lage, mehrere Power-Bausteine anzusteuern. Dadurch können durch den Microsecond-Bus-Controller MSCN auch mehr Verbraucher angesteuert werden als es der Fall wäre, wenn der Microsecond-Bus-Controller MSCN nur einen einzigen Power-Baustein ansteuern könnte.

Wenn der Microsecond-Bus-Controller MSCN an unterschiedlichen Power-Bausteinen angeschlossene Verbraucher ansteuern können soll, muß für jeden weiteren Power-Baustein eine zusätzliche Chip-Select-Leitung EN vorgesehen werden. Wenn der Microsecond-Bus-Controller MSCN also beispielsweise an vier Power-Bausteine Verbrauchersteuerdaten übertragen können soll, müssen vier Chip-Select-Leitungen EN1 bis EN4 vorgesehen werden, wobei jede dieser Chip-Select-Leitungen mit genau einem Power-Baustein verbunden ist, also beispielsweise die Chip-Select-Leitung EN1 mit dem ersten Power-Baustein, die Chip-Select-Leitung EN2 mit dem zweiten Power-Baustein, die Chip-Select-Leitung EN3 mit dem dritten Power-Baustein, und die Chip-Select-Leitung EN4 mit dem vierten Power-Baustein. Es müssen jedoch nicht mehrere Leitungen FCL und auch nicht mehrere Leitungen SO vorgesehen werden. Die vorhandene einzige FCL-Leitung und die vorhandene einzige SO-Leitung sind jeweils mit allen Power-Bausteinen verbunden. Für welchen Power-Baustein die über die Leitungen FCL und SO übertragenen Daten bzw. Signale bestimmt sind, wird den Power-Bausteinen durch die über die Chip-Select-Leitungen EN1 bis EN4 übertragenen Chip-Select-Signale signalisiert.

Der betrachtete Microsecond-Bus-Controller MSCN weist die Besonderheit auf, daß die innerhalb eines Zeitfensters ausgegebenen Verbrauchersteuerdaten für verschiedene Power-Bausteine bestimmt sein können, also beispielsweise die ersten 16 Bits dieser Daten für einen ersten Power-Baustein, und die restlichen 16 Bits für einen anderen Power-Baustein. D.h., der betrachtete Microsecond-Bus-Controller MSCN ist in der Lage, die Chip-Select-Signale während der Übertragung einer als zusammenhängende Einheit übertragenen Verbrauchersteuerdaten umzuschalten. Dies ist übrigens der Grund dafür daß die Schieberegistereinheit SR nicht nur ein einziges, 32 Bits umfassendes Schieberegister enthält, sondern zwei 16-Bit-Schieberegister SRL und SRH.

Wie vorstehend bereits erwähnt wurde, werden die vom Power-Baustein über die Leitung SDI zum Mikrocontroller übertragenen Diagnosedaten vorzugsweise asynchron übertragen. Die Diagnosedaten werden in Einheiten von Frames übertragen, die im betrachteten Beispiel jeweils 12 Bits umfassen. Der Aufbau eines solchen Frame ist in Figur 4 veranschaulicht.

Der in der Figur 4 gezeigte Frame enthält
- ein zur Synchronisation dienendes Start-Bit SB, welches im betrachteten Beispiel immer den Wert "0" aufweist,
- 8 Bits umfassende Diagnosedaten D0 bis D7,
- ein zur Fehlerkontrolle dienendes Parity-Bit PB,
- zwei zur Synchronisation dienende Stop-Bits EB1 und EB2, welche im betrachteten Beispiel immer den Wert "1" aufweisen.

Es dürfte einleuchten und bedarf keiner näheren Erläuterung, daß der Frame auch einen anderen Aufbau aufweisen könnte. Insbesondere können die Diagnosedaten beliebig viel mehr oder weniger Bits aufweisen, und muß der Frame nicht unbedingt ein Parity-Bit enthalten. Darüber hinaus könnte vorgesehen werden, daß der Frame nur 1 Stop-Bit enthält.

Den Übertragungstakt, mit welchem der Power-Baustein die Bits der Diagnosedaten-Frames überträgt, generiert der Power-Baustein aus dem ihm über die Leitung FCL übermittelten Übertragungstakt: der Power-Baustein teilt den ihm über die Leitung FCL zugeführten Übertragungstakt durch einen ihm vorgegebenen Teilerfaktor und verwendet den daraus resultierenden Takt als Übertragungstakt für die Übertragung der Diagnosedaten. Der Teilerfaktor wird dem Power-Baustein durch den Mikrocontroller vorgegeben. Der Mikrocontroller übermittelt an den Power-Baustein bei der Initialisierung desselben Kontrolldaten, die unter anderem den zu verwendenden Teilerfaktor enthalten.

Da der für die Übertragung der Diagnosedaten verwendete Übertragungstakt im Power-Baustein nach den Vorgaben des Mikrocontrollers erzeugt wird und dem Mikrocontroller folglich bekannt ist, muß weder vom Mikrocontroller zum Power-Baustein, noch vom Power-Baustein zum Mikrocontroller ein Taktsignal übertragen werden, das den für die Diagnosedaten-Übertragung zu verwendenden bzw. verwendeten Übertragungstakt repräsentiert. Dadurch kann die beim Microsecond-Bus der ersten Generation noch vorhandene Übertragungstakt-Leitung CLK1 ersatzlos entfallen.

Da über die Leitung SDI nur Daten vom Power-Baustein zum Mikrocontroller übertragen werden, kann auch die beim Microsecond-Bus der ersten Generation noch vorhandene Chip-Select-Leitung CS1 ersatzlos entfallen.

Die selben positiven Effekte ließen sich erzielen, wenn in den Diagnosedaten-Frames die Start- und Stop-Bits weggelassen werden, und der Mikrocontroller die Phasenlage der Diagnosedaten durch eine Überabtastung der Diagnosedaten ermittelt.

Eine weitere Alternative besteht darin, daß auch der erste Übertragungskanal TCN1 eine Übertragungstakt-Leitung umfaßt, über welche der Mikrocontroller zum Power-Baustein, oder Power-Baustein zum Mikrocontroller ein Übertragungstaktsignal überträgt, und daß der Power-Baustein die Diagnosedaten im Takt dieses Übertragungstaktsignals überträgt. Hierzu muß zwar eine zusätzlich Leitung vorgesehen werden, doch ist die Gesamtanzahl der zwischen dem Mikrocontroller und dem Power-Baustein vorzusehenden Leitungen dabei immer noch geringer als bei dem eingangs beschriebenen Microsecond-Bus der ersten Generation.

Insbesondere wenn der Mikrocontroller und der Power-Baustein weit voneinander entfernt sind, also lange Leitungen zwischen diesen vorgesehen werden müssen, müssen die Ausgangstreiber des Mikrocontrollers sehr starke Treiber sein. Dadurch können starke elektromagnetische Störungen entstehen.

Um dies zu vermeiden, kann vorgesehen werden, spezielle Treiber zu verwenden, die nur relativ schwache elektromagnetische Störungen verursachen. Solche Treiber sind beispielsweise die sogenannten LVDS-Treiber. Bei der Verwendung von LVDS-Treibern werden die zu übertragenden Daten auf zwei Leitungen anstatt nur auf einer Leitung übertragen, wobei auf der einen Leitung die eigentlich zu übertragenden Daten bzw. Signale übertragen werden, und wobei auf der anderen Leitung komplementäre Daten bzw. Signale übertragen werden.

Wenn der Mikrocontroller solche Treiber aufweist, überträgt er die Daten, die er bei dem in den Figuren 2 und 3 gezeigten und unter Bezugnahme darauf beschriebenen Ausführungsbeispiel über die Leitung SO überträgt, über zwei Leitungen SOP und SON, wobei über die Leitung SOP die Daten übertragen werden, die bei dem in den Figuren 2 und 3 gezeigten Ausführungsbeispiel über die Leitung SO übertragen werden, und wobei über die Leitung SON die komplementären Daten, d.h. die durch einen Inverter invertierten Daten übertragen werden. Entsprechendes gilt für die Daten, die bei dem in den Figuren 2 und 3 gezeigten und unter Bezugnahme darauf beschriebenen Ausführungsbeispiel über die Leitung FCL übertragen werden. Diese Daten bzw. Signale werden bei Verwendung von LVDS-Treibern über zwei Leitungen FCLP und FCLN übertragen, wobei über die Leitung FCLP die Daten übertragen werden, die bei dem in den Figuren 2 und 3 gezeigten Ausführungsbeispiel über die Leitung FCL übertragen werden, und wobei über die Leitung FCLN die komplementären Daten, d.h. die durch einen Inverter invertierten Daten übertragen werden.

Für die über die Leitungen EN und SDI übertragenen Daten müssen keine LVDS-Treiber oder sonstige EMV-optimierte Treiber verwendet werden, weil die darüber übertragenen Daten vergleichsweise selten ihren Pegel ändern und folglich nur geringe elektromagnetische Störungen verursachen.

Es könnte auch vorgesehen werden, daß für die über die Leitungen FCL und SO zu übertragenden Daten bzw. Signale sowohl normale Treiber als auch LVDS-Treiber vorgesehen werden, und daß der Mikrocontroller Anschlüsse für Leitungen FCL, FCLP, und FCLN, sowie für Leitungen SO, SOP, und SON aufweist. In diesem Fall könnte es von den jeweiligen Verhältnissen abhängig gemacht werden, ob die Verbrauchersteuerdaten und die Kontrolldaten durch einen normalen Treiber und eine einzige Leitung SO oder durch LVDS-Treiber und zwei Leitungen SOP und SON übertragen werden, und ob das Übertragungstaktsignal durch einen normalen Treiber und eine einzige Leitung FCL oder durch LVDS-Treiber und zwei Leitungen FCLP und FCLN übertragen wird.

Eine weitere Besonderheit der vorliegend beschriebenen Anordnung besteht darin, daß der Mikrocontroller den Power-Baustein flexibler steuern kann als es bei herkömmlichen Anordnungen dieser Art der Fall ist.

Im folgenden werden einige der vorhandenen Möglichkeiten zur Steuerung des Power-Bausteines durch den Mikrocontroller vorgestellt. Die genannten Steuerungen des Power-Bausteines durch den Mikrocontroller erfolgen jeweils durch die Übermittlung entsprechender Kontrolldaten an den Power-Baustein.

Eine der vorhandenen Möglichkeiten zur Steuerung des Power-Bausteins durch den Mikrocontroller besteht darin, daß der Mikrocontroller durch Übertragung entsprechender Kontrolldaten an den Power-Baustein das Verhalten des die Diagnosedaten ausgebenden Ausgangstreibers des Power-Bausteins einstellen kann. Insbesondere ist einstellbar, ob der Diagnosedaten-Ausgangstreiber nach dem Push/Pull-Verfahren oder nach dem Open-Drain-Verfahren arbeitet, und wie steil die Flanken der vom Diagnosedaten-Ausgangstreiber ausgegebenen Signale sein sollen.

Eine weitere Möglichkeit zur Steuerung des Power-Bausteins durch den Mikrocontroller besteht darin, daß der Mikrocontroller durch Übertragung entsprechender Kontrolldaten an den Power-Baustein das Verhalten der die Verbraucher steuernden Ausgangstreiber des Power-Bausteins einstellen kann. Insbesondere ist das Timing von in den Ausgangstreibern ablaufenden Vorgängen einstellbar, beispielsweise der zeitliche Abstand, in welchem die Ansteuerung von in den Ausgangstreibern enthaltenen Transistoren verändert wird, die gleichzeitig vom leitenden in den sperrenden Zustand oder umgekehrt gebracht werden müssen, aber nicht gleich schnell schalten und bei gleichzeitiger Veränderung der Ansteuerung einen Kurzschluß verursachen können. Darüber hinaus kann der Mikrocontroller durch Übertragung entsprechender Kontrolldaten an den Power-Baustein auch die Flankensteilheit der aus diesen Ausgangstreibern ausgegebenen Spannungen und Ströme einstellen.

Eine weitere Möglichkeit zur Steuerung des Power-Bausteins durch den Mikrocontroller besteht darin, daß der Mikrocontroller durch Übertragung entsprechender Kontrolldaten an den Power-Baustein die Schutzmechanismen des Power-Bausteins konfigurieren kann. Durch die im Power-Baustein vorhandenen Schutzmechanismen können beispielsweise die Temperatur des Power-Bausteins, und die von den Verbrauchern gezogenen Ströme überwacht werden. Bei der betrachteten Anordnung kann durch den Mikrocontroller im Power-Baustein unter anderem eingestellt werden, wie der Power-Baustein auf die Erfassung eines anormalen Zustandes oder eines anormalen Ereignisses reagiert, und welche Bedingungen vorliegen müssen, damit ein Zustand oder Ereignis als anormal einzustufen ist. Die Reaktion auf die Erfassung eines anormalen Zustandes besteht im betrachteten Beispiel wahlweise in der Übermittlung einer entsprechenden Meldung und/oder in der selbständigen Ergreifung von Maßnahmen zur Behebung des anormalen Zustandes. Darüber hinaus ist es bei der beschriebenen Anordnung möglich, die Bedingungen, die erfüllt sein müssen, damit der herrschende Zustand als anormaler Zustand eingestuft wird, an sich ändernde Verhältnisse anzupassen. Genauer gesagt erfolgt im betrachteten Beispiel die Festlegung der genannten Bedingungen unter Berücksichtigung des zeitlichen Verhaltens der Verbraucher. Beispielsweise kann vorgesehen werden, daß der zulässige Strom, der von einem am Power-Baustein angeschlossenen Verbraucher gezogen werden darf, eine gewisse Zeit nach dem Beginn der Energiezufuhr an den Verbraucher größer ist als danach. Der Mikrocontroller berücksichtigt dies, indem er an den Power-Baustein zunächst einen hohen Strom-Grenzwert übermittelt, und mehr oder weniger lange danach einen an die veränderten Verhältnisse angepaßten niedrigeren Grenzwert übermittelt. Es könnte auch vorgesehen werden, dem Power-Baustein gleich von Anfang an verschieden hohe Grenzwerte vorzugeben, und zu definieren, wann welcher Grenzwert zu verwenden ist.

Eine weitere Möglichkeit zur Steuerung des Power-Bausteins durch den Mikrocontroller besteht darin, daß der Mikrocontroller durch Übertragung entsprechender Kontrolldaten an den Power-Baustein die Übertragungstaktrate einstellen kann, mit welcher der Power-Baustein die Diagnosedaten überträgt. Dies wurde vorstehend bereits erläutert.

Eine weitere Möglichkeit zur Steuerung des Power-Bausteins durch den Mikrocontroller besteht darin, daß der Mikrocontroller durch Übertragung entsprechender Kontrolldaten an den Power-Baustein die Ausgabe ausgewählter Diagnosedaten veranlassen kann. In diesem Fall kann der Power-Baustein so konstruiert werden, daß er nur auf eine entsprechende Veranlassung durch dem Mikrocontroller Diagnosedaten ausgibt, und daß der Power-Baustein nicht immer sämtliche Diagnosedaten ausgibt, zur deren Ausgabe er in der Lage ist, sondern nur die vom Mikrocontroller angeforderten Diagnosedaten. Herkömmliche Power-Bausteine geben auf eigene Veranlassung in mehr oder weniger großen zeitlichen Abständen jeweils sämtliche Diagnosedaten aus, zur deren Ausgabe sie in der Lage sind. Dies stellt einerseits sowohl für den Power-Baustein als auch für den Mikrocontroller eine hohe Belastung dar und kann andererseits dazu führen, daß die Reaktion des Mikrocontrollers auf anormale Zustände oder Ereignisse erst relativ lange nach dem Auftreten des anormalen Zustandes oder des anormalen Ereignisses erfolgt.

Eine weitere Möglichkeit zur Steuerung des Power-Bausteins durch den Mikrocontroller besteht darin, daß der Mikrocontroller durch Übertragung entsprechender Kontrolldaten an den Power-Baustein das Format der Diagnosedaten festlegt. Insbesondere kann dem Power-Baustein durch den Mikrocontroller vorgegeben werden, daß die von diesem ausgegebenen Diagnosedaten neben den eigentlichen Diagnosedaten zusätzliche Angaben über den die Diagnosedaten ausgebenden Power-Baustein und/oder über die durch die Diagnosedaten repräsentierte Information enthalten, und worin diese Angaben im einzelnen bestehen. Im betrachteten Beispiel ist es so, daß der Power-Baustein durch den Mikrocontroller veranlaßbar ist, anstelle des in der Figur 4 verwendeten Diagnosedaten-Frames einen in der Figur 5 gezeigten Diagnosedaten-Frame zu verwenden. Der in der Figur 5 gezeigte Diagnosedaten-Frame entspricht weitgehend dem in der Figur 4 gezeigten Diagnosedaten-Frame; mit den selben Bezugszeichen bezeichnete Bits bezeichnen einander entsprechende Bits. Der in der Figur 5 gezeigte Diagnosedaten-Frame enthält allerdings vier Zusatzinformations-Bits Z0 bis Z3, wobei die Zusatzinformations-Bits Z0 und Z1 eine Information darüber enthalten, von welchem Power-Baustein die Diagnosedaten stammen, und wobei die Zusatzinformations-Bits Z2 und Z3 eine Information darüber enthalten, welche Information durch die in den Bits D0 bis D7 enthaltenen Daten repräsentiert wird, also beispielsweise ob diese Daten eine Temperatur oder einen Strom betreffen. Darüber hinaus gibt der Mikrocontroller dem Power-Baustein vor, welchen Inhalt die Zusatzinformations-Bits Z0 bis Z3 jeweils haben müssen.

Eine weitere Möglichkeit zur Steuerung des Power-Bausteins durch den Mikrocontroller besteht darin, daß der Mikrocontroller durch Übertragung entsprechender Kontrolldaten an den Power-Baustein die Zuordnung zwischen den Bits der Verbrauchersteuerdaten-Frames und den dadurch zu steuernden Verbrauchern festlegt. Durch eine solche Festlegung kann dem Power-Baustein beispielsweise vorgegeben werden, daß er das n-te Bit der Verbrauchersteuerdaten-Frames zur Steuerung des m-ten Verbrauchers zu verwenden hat, oder daß er das n-te Bit der Verbrauchersteuerdaten-Frame zur Steuerung des n-ten Verbrauchers und des m-ten Verbrauchers zu verwenden hat.

Eine weitere Möglichkeit zur Steuerung des Power-Bausteins durch den Mikrocontroller besteht darin, daß der Mikrocontroller durch Übertragung entsprechender Kontrolldaten an den Power-Baustein dem Power-Baustein mitteilt, ob die Verbrauchersteuerdaten zur Erkennung von Übertragungsfehlern geeignete redundante Daten enthalten, und welches diese redundanten Daten sind. Auf diese Weise erhält der Power-Baustein beispielsweise die Information, daß die Bits n und m der Verbrauchersteuerdaten-Frames einander entsprechende (oder komplementäre) Daten sind. Der Power-Baustein kann somit durch einen Vergleich der Bits n und m der Verbrauchersteuerdaten-Frames überprüfen, ob die Verbrauchersteuerdaten fehlerfrei übertragen wurden oder nicht. Von dieser Möglichkeit kann insbesondere Gebrauch gemacht werden, wenn am Power-Baustein weniger Verbraucher angeschlossen sind als angeschlossen werden könnten, oder wenn von den angeschlossenen Verbrauchern mehrere Verbraucher identisch anzusteuern sind.

Die Ausnutzung der vorstehend genannten Möglichkeiten zur Steuerung des Power-Bausteins durch den Mikrocontroller kann zur Folge haben, daß der Mikrocontroller eine größere Menge an Kontrolldaten zum Power-Baustein zu übertragen hat als es bei herkömmlichen Anordnungen der beschriebenen Art der Fall ist. Da bei der hier vorgestellten Anordnung die Kontrolldaten jedoch nicht mehr über einen bidirektionalen Übertragungskanal übertragen werden, bereitet dies keine Probleme.

### Bezugszeichenliste

- ALTINO: Bus zur Verbindung von T und MSCN
- ALTIN1: Bus zur Verbindung von T und MSCN
- CLK1: Übertragungstakt-Leitung von TC1
- CLK2: Übertragungstakt-Leitung von TC2
- CS1: Chip-Select-Leitung von TC1
- CS2: Chip-Select-Leitung von TC2
- CTRL: Steuereinrichtung
- CPU: CPU
- Dx: Daten-Bit
- DATA1a: Daten-Leitung von TC1
- DATA1b: Daten-Leitung von TC1
- DATA2: Daten-Leitung von TC2
- DC: Kommandoregister
- DD: Datenregister
- EBx: Stop-Bits
- EN: Chip-Select-Leitung von TCN2
- FCL: Übertragungstakt-Leitung von TCN2
- MC: Mikrocontroller
- MCN: Mikrocontroller
- MSB: Microsecond-Bus
- MSBN: modifizierter Microsecond-Bus
- MSC: Microsecond-Bus-Controller
- MSCN: modifizierter Microsecond-Bus-Controller
- Px: Einheiten von MC
- PB: Parity-Bit
- PC: Power-Baustein
- PCN: Power-Baustein
- SB: Start-Bit
- SDI: Daten-Leitung von TCN1
- SELCTRL: Steuerleitung für SELH und SELL
- SELH: Auswahleinrichtung
- SELL: Auswahleinrichtung
- SO: Daten-Leitung von TCN2
- SR: Schieberegister-Einheit
- SRH: Schieberegister
- SRL: Schieberegister
- SYSBUS: interner Systembus
- T: Timer
- TC1: erster Übertragungskanal
- TCN1: erster Übertragungskanal
- TC2: zweiter Übertragungskanal
- TCN2: zweiter Übertragungskanal
- Zx: Zusatzinformations-Bits

## Patentansprüche

1. Anordnung bestehend aus einer programmgesteuerten Einheit (MCN) und einem mit dieser verbundenen Power-Baustein (PCN),
- wobei der Power-Baustein (PCN) zusätzlich mit elektrischen Verbrauchern verbunden ist, und diese elektrischen Verbraucher entsprechend einem ihm (PCN) durch Verbrauchersteuerdaten vorgegebenen Timing ansteuert,
- wobei die programmgesteuerte Einheit (MCN)die erwähnten Verbrauchersteuerdaten zum Power-Baustein (PCN) überträgt, und
- wobei der Power-Baustein (PCN) zur programmgesteuerten Einheit (MCN) Diagnosedaten überträgt, durch welche im Power-Baustein (PCN) herrschende Zustände oder auftretende Ereignisse repräsentiert werden,
**dadurch gekennzeichnet,**
**daß** die programmgesteuerte Einheit (MCN) ferner den Power-Baustein (PCN) steuernde Kontrolldaten zum Power-Baustein (PCN) überträgt, und
**daß** die programmgesteuerte Einheit (MCN) durch Übertragung entsprechender Kontrolldaten zum Power-Baustein (PCN)
- das Verhalten der Ausgangstreiber des Power-Bausteins (PCN) vorgeben kann, und/oder
- im Power-Baustein (PCN) vorhandene Schutzmechanismen konfigurieren kann.

2. Anordnung nach Anspruch 1,
**dadurch gekennzeichnet,**
**daß** die programmgesteuerte Einheit (MCN) dem Power-Baustein (PCN) durch Übertragung entsprechender Kontrolldaten zum Power-Baustein (PCN) das Verhalten des Diagnosedaten-Ausgangstreibers des Power-Bausteins (PCN) vorgibt, welcher die Diagnosedaten ausgibt.

3. Anordnung nach Anspruch 2,
**dadurch gekennzeichnet,**
**daß** die programmgesteuerte Einheit (MCN) dem Power-Baustein (PCN) durch Übertragung entsprechender Kontrolldaten zum Power-Baustein (PCN) vorgibt, ob der Diagnosedaten-Ausgangstreiber des Power-Bausteins (PCN) nach dem Push/Pull-Verfahren oder nach dem Open-Drain-Verfahren arbeitet.

4. Anordnung nach Anspruch 2,
**dadurch gekennzeichnet,**
**daß** die programmgesteuerte Einheit (MCN) dem Power-Baustein (PCN) durch Übertragung entsprechender Kontrolldaten zum Power-Baustein (PCN) vorgibt, wie steil die Flanken der vom Diagnosedaten-Ausgangstreiber ausgegebenen Signale sein sollen.

5. Anordnung nach Anspruch 1,
**dadurch gekennzeichnet,**
**daß** die programmgesteuerte Einheit (MCN) dem Power-Baustein (PCN) durch Übertragung entsprechender Kontrolldaten zum Power-Baustein (PCN) das Verhalten der Verbrauchersteuerdaten-Ausgangstreiber des Power-Bausteins (PCN) vorgibt, welche die zu den am Power-Baustein (PCN) angeschlossenen Verbrauchern auszugebenden Ströme und Spannungen ausgeben.

6. Anordnung nach Anspruch 5,
**dadurch gekennzeichnet,**
**daß** die programmgesteuerte Einheit (MCN) dem Power-Baustein (PCN) durch Übertragung entsprechender Kontrolldaten zum Power-Baustein (PCN) das Timing von in den Verbrauchersteuerdaten-Ausgangstreibern ablaufenden Vorgängen vorgibt.

7. Anordnung nach Anspruch 6,
**dadurch gekennzeichnet,**
**daß** die programmgesteuerte Einheit (MCN) dem Power-Baustein (PCN) durch Übertragung entsprechender Kontrolldaten zum Power-Baustein (PCN) vorgibt, wie groß der zeitliche Abstand ist, in welchem die Ansteuerung von in den Verbrauchersteuerdaten-Ausgangstreibern enthaltenen Transistoren zu erfolgen hat, welche gleichzeitig vom leitenden in den sperrenden Zustand oder umgekehrt gebracht werden müssen, aber nicht gleich schnell schalten und bei gleichzeitiger Veränderung der Ansteuerung einen Kurzschluß verursachen können.

8. Anordnung nach Anspruch 5,
**dadurch gekennzeichnet,**
**daß** die programmgesteuerte Einheit (MCN) dem Power-Baustein (PCN) durch Übertragung entsprechender Kontrolldaten zum Power-Baustein (PCN) vorgibt, wie steil die Flanken der von den Verbrauchersteuerdaten-Ausgangstreibern ausgegebenen Signale sein sollen.

9. Anordnung nach Anspruch 1,
**dadurch gekennzeichnet,**
**daß** die programmgesteuerte Einheit (MCN) dem Power-Baustein (PCN) durch Übertragung entsprechender Kontrolldaten zum Power-Baustein (PCN) vorgibt, welche Zustände oder Ereignisse als anormale Zustände oder Ereignisse anzusehen sind.

10. Anordnung nach Anspruch 9,
**dadurch gekennzeichnet,**
**daß** die Vorgabe der als anormal anzusehenden Zustände oder Ereignisse unter Berücksichtigung des zeitlichen Verhaltens der am Power-Baustein (PCN) angeschlossenen Verbraucher erfolgt.

11. Anordnung nach Anspruch 1,
**dadurch gekennzeichnet,**
**daß** die programmgesteuerte Einheit (MCN) dem Power-Baustein (PCN) durch Übertragung entsprechender Kontrolldaten zum Power-Baustein (PCN) vorgibt, wie er auf die Erfassung eines anormalen Zustandes oder Ereignisses zu reagieren hat.

## Claims

1. Arrangement consisting of a programme controlled unit (MCN) and a power chip (PCN) connected to it,
- the power chip (PCN) being additionally connected to electric loads and driving these electric loads in accordance with timing input to it (PCN) by means of load control data,
- the programme controlled unit (MCN) transmitting the abovementioned load control data to the power chip, and
- the power chip (PCN) transmitting to the programme controlled unit (MCN) diagnostic data by means of which states prevailing in the power chip (PCN) or events occurring are represented,
**characterized in that** the programme-controlled unit (MCN) furthermore transmits control data controlling the power chip (PCN) to the power chip (PCN), and **in that** the programme controlled unit (MCN), by transmitting corresponding control data to the power chip (PCN), can
- input the behavior of the output drivers of the power chip (PCN) and/or
- configure protective mechanisms present in the power chip (PCN)

2. Arrangement according to Claim 1, **characterized in that** the programme controlled unit (MCN) inputs the behavior of the diagnostic data output driver of the power chip (PCN) which outputs the diagnostic data, to the power chip (PCN) by transmitting corresponding control data to the power chip (PCN).

3. Arrangement according to Claim 2, **characterized in that** the programme controlled unit (MCN) inputs to the power chip (PCN), by transmitting corresponding control data to the power chip (PCN), whether the diagnostic data output driver of the power chip (PCN) operates in accordance with the push/pull method or in accordance with the open-drain method.

4. Arrangement according to Claim 2, **characterized in that** the programme controlled unit (MCN) inputs to the power chip (PCN), by transmitting corresponding control data to the power chip (PCN), how steep the edges of the signals output by the diagnostic data output driver should be.

5. Arrangement according to Claim 1, **characterized in that** the programme controlled unit (MCN) inputs to the power chip (PCN), by transmitting corresponding control data to the power chip (PCN), the behaviour of the load control data output drivers of the power chip (PCN) which output the currents and voltages to be output to the loads connected to the power chip (PCN).

6. Arrangement according to Claim 5, **characterized in that** the programme controlled unit (MCN) inputs to the power chip (PCN), by transmitting corresponding control data to the power chip (PCN), the timing of processes running in the load control data output drivers.

7. Arrangement according to Claim 6, **characterized in that** the programme controlled unit (MCN) inputs to the power chip (PCN), by transmitting corresponding control data to the power chip (PCN), how great the time interval is in which the drive of transistors contained in the load control data output drivers has to take place, which transistors must be brought simultaneously from the conducting into the nonconducting state or conversely, but cannot switch at the same speed and can cause a short circuit if the drive is changed simultaneously.

8. Arrangement according to Claim 5, **characterized in that** the programme controlled unit (MCN) inputs to the power chip (PCN), by transmitting corresponding control data to the power chip (PCN), how steep the edges of the signals output by the load control data output drivers have to be.

9. Arrangement according to Claim 1, **characterized in that** the programme controlled unit (MCN) inputs to the power chip (PCN), by transmitting corresponding control data to the power chip (PCN), what states or events have to be considered as abnormal states or events.

10. Arrangement according to Claim 9, **characterized in that** the states or events to be considered as abnormal are input taking into consideration the behaviour of the loads connected to the power chip (PCN) with time.

11. Arrangement according to Claim 1, **characterized in that** the programme controlled unit (MCN) inputs to the power chip (PCN), by transmitting corresponding control data to the power chip (PCN), how it has to respond to the detection of an abnormal state or event.

## Revendications

1. Arrangement composé d'une unité commandée par programme (MCN) et d'un composant de puissance (PCN) relié à celle-ci,
- le composant de puissance (PCN) étant en plus relié avec des charges électriques et commandant ces charges électriques en fonction d'une temporisation qui lui (PCN) est préalablement communiquée par des données de commande de charge,
- l'unité commandée par programme (MCN) transmettant lesdites données de commande de charge au composant de puissance (PCN), et
- le composant de puissance (PCN) transmettant à l'unité commandée par programme (MCN) des données de diagnostic par le biais desquelles sont représentés des états qui règnent dans le composant de puissance (PCN) ou des événements qui y surviennent,
**caractérisé en ce**
**que** l'unité commandée par programme (MCN) transmet en plus au composant de puissance (PCN) des données de contrôle qui commandent le composant de puissance (PCN) et
**que** l'unité commandée par programme (MCN), en transmettant des données de contrôle correspondantes au composant de puissance (PCN),
- peut prédéfinir le comportement du circuit d'attaque de sortie du composant de puissance (PCN) et/ou
- peut configurer les mécanismes de protection présents dans le composant de puissance (PCN).

2. Arrangement selon la revendication 1, **caractérisé en ce que** l'unité commandée par programme (MCN) indique à l'avance au composant de puissance (PCN) le comportement du circuit d'attaque de sortie de données de diagnostic du composant de puissance (PCN), qui délivre les données de diagmostic, en transmettant des données de contrôle correspondantes au composant de puissance (PCN).

3. Arrangement selon la revendication 2, **caractérisé en ce que** l'unité commandée par programme (MCN) indique à l'avance au composant de puissance (PCN), en transmettant des données de contrôle correspondantes au composant de puissance (PCN), si le circuit d'attaque de sortie de données de diagnostic du composant de puissance (PCN) fonctionne selon le procédé Push/Pull ou selon le procédé du drain ouvert.

4. Arrangement selon la revendication 2, **caractérisé en ce que** l'unité commandée par programme (MCN) indique à l'avance au composant de puissance (PCN), en transmettant des données de contrôle correspondantes au composant de puissance (PCN), la raideur que doivent avoir les fronts des signaux délivrés par le circuit d'attaque de sortie de données de diagnostic.

5. Arrangement selon la revendication 1, **caractérisé en ce que** l'unité commandée par programme (MCN) indique à l'avance au composant de puissance (PCN), en transmettant des données de contrôle correspondantes au composant de puissance (PCN), le comportement des circuits d'attaque de sortie de données de commande de charge du composant de puissance (PCN), lesquels délivrent les courants et les tensions à délivrer aux charges raccordées au composant de puissance (PCN).

6. Arrangement selon la revendication 5, **caractérisé en ce que** l'unité commandée par programme (MCN) indique à l'avance au composant de puissance (PCN), en transmettant des données de contrôle correspondantes au composant de puissance (PCN), la temporisation des opérations qui se déroulent dans les circuits d'attaque de sortie de données de commande de charge.

7. Arrangement selon la revendication 6, **caractérisé en ce que** l'unité commandée par programme (MCN) indique à l'avance au composant de puissance (PCN), en transmettant des données de contrôle correspondantes au composant de puissance (PCN), la durée de l'intervalle de temps pendant lequel doit avoir lieu l'excitation des transistors qui sont contenus dans les circuits d'attaque de sortie de données de commande de charge, lesquels doivent être amenés simultanément de l'état passant dans l'état bloqué ou inversement, mais qui ne commutent pas à la même vitesse et peuvent provoquer un court-circuit en cas de modification simultanée de l'excitation.

8. Arrangement selon la revendication 5, **caractérisé en ce que** l'unité commandée par programme (MCN) indique à l'avance au composant de puissance (PCN), en transmettant des données de contrôle correspondantes au composant de puissance (PCN), la raideur que doivent avoir les fronts des signaux délivrés par les circuits d'attaque de sortie de données de commande de charge.

9. Arrangement selon la revendication 1, **caractérisé en ce que** l'unité commandée par programme (MCN) indique à l'avance au composant de puissance (PCN), en transmettant des données de contrôle correspondantes au composant de puissance (PCN), les états ou événements qui sont à considérer comme des états ou des événements anormaux.

10. Arrangement selon la revendication 9, **caractérisé en ce que** l'indication à l'avance des états ou événements à considérer comme anormaux s'effectue en tenant compte du comportement dans le temps des charges raccordées au composant de puissance (PCN).

11. Arrangement selon la revendication 1, **caractérisé en ce que** l'unité commandée par programme (MCN) indique à l'avance au composant de puissance (PCN), en transmettant des données de contrôle correspondantes au composant de puissance (PCN), la manière dont il doit réagir lors de la détection d'un état ou d'un événement anormal.
